# EUROPÄISCHE PATENTSCHRIFT

(11) **EP 2 605 918 B1**
(45) Veröffentlichungstag und Bekanntmachung des Hinweises auf die Patenterteilung: **11.03.2015**
(21) Anmeldenummer: 11743235.1
(22) Anmeldetag: 11.08.2011
(51) Int. Cl.: B32B 37/12, B32B 27/36, B32B 37/18, B42D 25/00, G03H 1/00, G03H 1/02, G03H 1/18, B32B 38/00

(54) **DOKUMENT MIT EINGEBETTETEM HOLOGRAMM UND VERFAHREN ZU DESSEN HERSTELLUNG**
DOCUMENT WITH AN EMBEDDED HOLOGRAM AND ITS METHOS OF PRODUCTION
DOCUMENT PRÉSENTANT UN HOLOGRAMME ET PROCÉDÉ DE FABRICATION DUDIT DOCUMENT

(30) Priorität: 18.08.2010 DE 102010034793
(43) Veröffentlichungstag der Anmeldung: 26.06.2013
(73) Patentinhaber: Hologram Industries Research GmbH, 85652 Pliening-Ottersberg (DE)
(72) Erfinder: MENZ, Irina, 85630 Grasbrunn (DE); WANKE, Andreas, 81541 München (DE); DAUSMANN, Günther, 85630 Grasbrunn (DE); HUET, Philippe, F-91700 Sainte Geneviève des Bois (FR); SOUPARIS, Hugues, F-75012 Paris (FR)
(74) Vertreter: Farago, Peter Andreas
(86) Internationale Anmeldenummer: PCT/EP2011/063877
(87) Internationale Veröffentlichungsnummer: WO 2012/022675

(56) Entgegenhaltungen:
- DE-A1-102008 049 631
- US-A- 6 066 378
- US-A1- 2002 191 234

## Beschreibung

Die Erfindung betrifft ein Dokument wie z.B. Ausweiskarte, Smartcard oder Führerscheinkarte mit einem im Kunststoff-Kartenkörper eingebetteten Hologramm als Sicherheitsmerkmal sowie ein Verfahren zu dessen Herstellung gemäß Oberbegriff des Anspruchs 1 bzw. 2, zur Erhöhung der Fälschungssicherheit und Haltbarkeit.

Es ist bekannt, dass Volumenhologramme auf Photopolymerbasis, die auf die Kartenoberfläche z. B. von Ausweiskarten appliziert sind, mit einer Schutzfolie oder einem Schutzlack versiegelt werden müssen, um sie vor mechanischen und chemischen Umwelteinflüssen und Fälschungsmanipulationen zu schützen. Dafür müssen Schutzüberzüge gefunden werden, die sowohl eine hohe Haftfestigkeit als auch hohe Transparenz und Kratzfestigkeit über lange Zeiträume garantieren.

Eine Alternative zur Applikation solcher Volumenhologramme auf die Kartenoberfläche wäre das Einbetten von Volumenhologrammen in den Kartenkörper. Üblicherweise werden zur Herstellung von Polycarbonatkarten einzelne dünne Polycarbonatfolien unter hohem Druck und hoher Temperatur in einer Kartenlaminationspresse zum Kartenkörper laminiert. Um einen haltbaren Kartenverbund zu gewährleisten, werden Folien mit unterschiedlich großen Oberflächenrauhigkeiten verwendet. Wird ein Volumenhologrammfilm, insbesondere ein Reflexionsvolumenhologrammpolymerfilm, zwischen die Polycarbonatfolien gelegt und dann der Folienstapel in der Kartenlaminationspresse zum Kartenkörper laminiert, sind im Hologramm nach erfolgter Verpressung inhomogene farbliche Veränderungen sichtbar. Unter diesen Temperatur-/Druckbedingungen verformt sich das Hologramm um so mehr, je größer die Rauhigkeitstiefe der auf das Hologramm drückenden Polycarbonatfolien ist. Die im Hologramm gespeicherten Bragg'schen Netzebenen werden gestaucht und gestreckt, was Farbveränderungen bei der Hologrammrekonstruktion bewirkt. Ebenso führen bereits kleinste Staubpartikel, etc. zu sichtbaren Farbveränderungen des eingebetteten Hologramms.

In der WO 2005/091 085 A2 wird eine nachträgliche Individualisierung von Volumenhologrammen unter Ausnutzung dieses Verformungseffektes beschrieben, wobei die Verwendung von Folien mit Oberflächenreliefinformationen vorgeschlagen wird, welche mit Hitze und Druck ins Hologramm übertragen werden können. Die Stärke der Hologrammdeformation hängt auch von der Flächengröße des Volumenhologrammfilmes und seiner Dicke ab. Je dicker und kleiner die Filmfläche ist, um so größere Flächendrücke wirken auf den Film.

Es ist bisher keine Lösung bekannt, mit der Volumenhologramme ohne Veränderung bzw. Beeinträchtigung des holographischen Informationsgehalts in Kartenkörpern eingebettet werden können.

Holographische Aufzeichnungsfilme auf Polymerbasis zur Herstellung von Volumenhologrammen, insbesondere Reflexionsvolumenhologrammen sind seit langem bekannt. Die Filme werden zur Erreichung hoher Beugungswirkungsgrade der mittels Laserlicht von einem Master kopierten Informationen unterschiedlich nachbehandelt. Der Beugungswirkungsgrad ist ein Maß für die Helligkeit eines Reflexionshologramms, mit der das Hologramm im entsprechenden Rekonstruktionswinkel vom Betrachter wahrgenommen wird. Es gibt Filme, die nach der Laserbelichtung und der anschließenden UV-Lichtfixierung durch einen weiteren 30 - 60 minütigen Backprozess bei Temperaturen > 100°C nachbehandelt werden. Durch diesen Backvorgang kann der Beugungswirkungsgrad von ca. 60% auf bis zu 96% gesteigert werden.

Zur Massenproduktion von Volumenhologrammen mit höchstem Beugungswirkungsgrad wird üblicherweise Polymerfilmrollenware verwendet. Der Polymerfilm wird auf einen Master laminiert, mit Laserlicht die Informationen vom Master in den Film kopiert, wieder der Film vom Master delaminiert, mit UV-Licht die kopierte Information fixiert und wieder zur Rolle aufgewickelt. Nach der UV-Fixierung wird die belichtete Polymerfilmrolle wieder abgewickelt und durch einen Ofen geführt und bei höheren Temperaturen gebacken, um den Beugungswirkungsgrad weiter zu steigern. Je nach gewählter Temperatur und Größe des Ofens geschieht dies mit mehr oder weniger hoher Foliendurchlaufgeschwindigkeit. Dieser Vorgang stellt den geschwindigkeitsbestimmenden Schritt bei der Massenproduktion dar.

In der WO 2007/131 496 A2 wird eine nachträgliche Personalisierung von Volumenhologrammen während ihrer Applikation auf Ausweiskarten mit monomerhaltigem Klebstoff mit Hilfe eines Masken-Colortuningprozesses beschrieben. Der Produzent solcher Ausweise belichtet einen holographischen Polymerfilm im eigenen Haus oder bezieht den bereits belichteten holographischen Film, appliziert und individualisiert den Film auf Ausweiskarten und muß als letzten Schritt die Kartenoberfläche mit einem Schutzüberzug versiegeln. Der Aufwand zur Realisierung dieser Verfahrensschritte ist für den Produzenten hoch.

Aus der US 6,006,378 A und der US 2002/0191234 A1 sind mehrschichtige Kunststofffolien-Laminate mit in diesen eingebetteten Volumenhologrammen bekannt. Diese dienen jedoch nicht zur Einbettung in ein Substrat, wie mehrschichtigen Kartenkörper, sondern nur zur Applikation auf die Oberfläche eines Substrats, z. B. über dem Foto oder den Personaldaten einer Ausweiskarte, oder z. B. einer CD. Dabei sind sie so aufgebaut, dass sie nicht zerstörungsfrei vom Substrat wieder abgezogen werden können, so dass eine Manipulation erkennbar ist. Durch die Anordnung der Hologramm-Label auf dem z. B. Kartenkörper, stellen sie aber eine bestimmte Erhabenheit auf diesem dar, so dass die entsprechenden (Ausweis-) Karten nicht im Zusammenhang mit Automaten verwendbar sind.

Aus der DE 10 2008 049 631 A1 ist eine Mehrschichtkarte mit eingebettetem Sicherheitsmerkmal bekannt, bei der zwischen zwei Kunststofffolien ein Sicherheitselement mit Reliefstruktur, wie Prägehologramm mit einer offenen und einer versteckten Bildinformation, eingeklebt ist. Dieser Verbund wird anschließend mit weiteren Folien zu einem Karten-Schichtverbund laminiert. Das eingebettete Hologrammlabel liefert jedoch immer nur Muster oder Bildinformationen, stellt keine Möglichkeit einer Individualisierung mit Personaldaten zur Verfügung, zur Erhöhung der Fälschungssicherheit eines Ausweises.

**Aufgabe** der Erfindung ist es daher, ein Dokument mit eingebetetem Hologramm sowie ein Verfahren zu dessen Herstellung anzugeben, bei dem unter minimalen Kosten und Aufwand ein Hologramm als Sicherheitsmerkmal in den Dokumentenkartenkörper eingebettet wird, ohne dass der Informationsgehalt des Hologramms dabei beeinträchtigt ist oder wird, das mit individualisierten Personaldaten ausstattbar ist und wobei zudem die mechanische und chemische Belastbarkeit und Lebensdauer der Ausweiskarte sowie deren Fälschungssicherheit weiter verbessert werden.

Diese Aufgabe wird durch ein Dokument mit eingebetetem Hologramm gemäß Anspruch 1 und einem Verfahren zur dessen Herstellung gemäß Anspruch 2 gelöst. Vorteilhafte Weiterbildungen sind in den jeweils rückbezogenen Unteransprüchen gekennzeichnet.

Dem gemäß besteht das erfindungsgemäße Dokument mit eingebettetem Hologramm, z. B. eine Ausweiskarte (12), aus einem Kartenkörper (10) auf Kunststoffbasis, insbesondere Polycarbonat, in das ein vollständig klebstoffummanteltes Volumenhologrammlabel (2, 9) eingebettet ist. Dabei wurde das Volumenhologrammlabel (2) während des temperatur- und druckunterstützten Kartenkörperlaminationsprozesses unter vollständigem Erhalt der holographischen Information in den Kartenkörper (10) der Ausweiskarte (12) eingebettet.

Vorzugsweise ist das Volumenhologrammlabel ein individualisiertes Volumenhologrammlabel (9), dessen individuelle Personaldaten während der Verklebung mit strahlenhärtendem monomerhaltigem Klebstoff (7) gemäß Anspruch 8 erzeugt wurden.

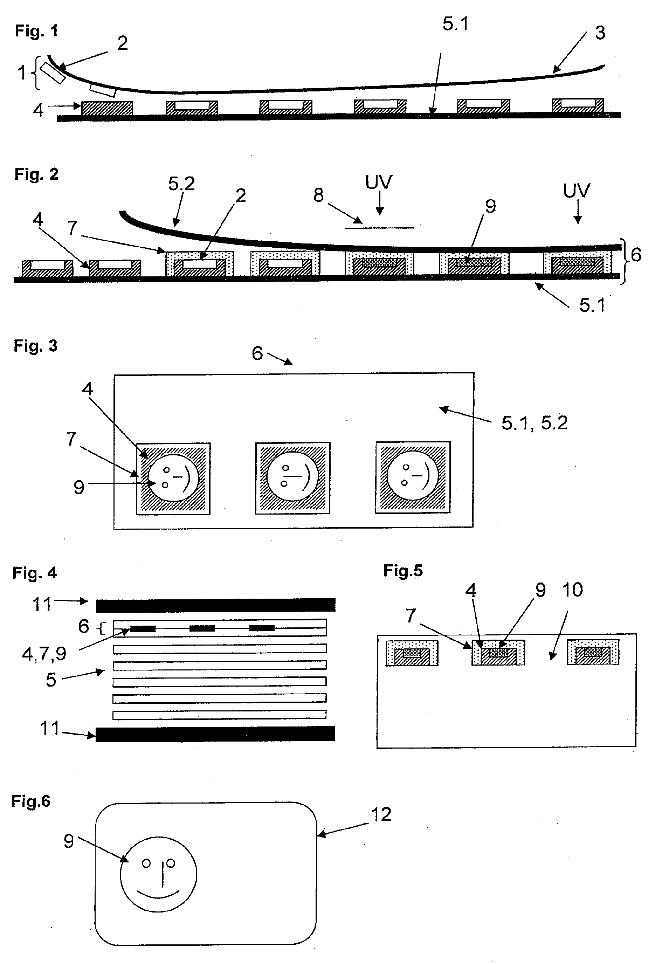

Entsprechend dem erfindungsgemäßen Verfahren zur Herstellung des Dokuments wird die Aufgabe dadurch gelöst, dass in einem ersten Verfahrensschritt ein Reflexionsvolumenhologrammlabel-Film (1), bestehend aus Volumenhologrammlabel (2) mit Schichtdicken von 10 - 20 µm auf einer Trägerfolie (3), zunächst mit Klebstoff (4) auf eine dünne thermoplastische Kunststofffolie (5.1) mit rauer Oberfläche, bevorzugter Weise eine Polycarbonatfolie mit einer Foliendicke zwischen 50 - 200 µm aufgeklebt und danach die Trägerfolie (3) abgezogen wird (Fig. 1).

Im zweiten Schritt wird auf die Hologramm-Labeloberfläche eine weitere Klebstoffschicht aufgetragen und zusammen mit einer zweiten Kunststofffolie (5.2) mit rauer Oberfläche, bevorzugt eine Polycarbonatfolie, zu einem Zweilagen-Folienverbund (6) verklebt. Man kann den Klebstoff ebenfalls auf die zweite Polycarbonatfolie (5.2) auftragen und dann mit der hologrammtragenden Polycarbonatfolie im Bereich der Labels in Kontakt bringen und aushärten.

Der im zweiten Schritt aufgetragene Klebstoff kann ein strahlenhärtender, monomerhaltiger Klebstoff (7) sein, der mittels Belichtung durch eine Maske (8) teilweise ausgehärtet wird und nach Maskenentfernung und einer gewissen Einwirkzeit des in bestimmten Bereichen noch flüssigen Klebstoffes, einer vollständigen Lichtaushärtung unterworfen werden (Fig. 2). Auf diese Weise werden individuelle Informationen der Maske in das Hologramm übertragen. Diese Hologrammindividualisierung ist als Colortuning-Verfahren bereits bekannt.

Der Zweilagen-Folienverbund (6) mit dem individualisierten Hologrammlabel (9) zwischen den beiden Polycarbonatfolien wird nun zusammen mit weiteren Polycarbonatfolien (5) in einer Kartenlaminationspresse zum Kartenkörper (10) verpresst (Fig. 4). Üblicherweise geschieht die Polycarbonatkartenkörperherstellung in einer Vorrichtung, bestehend aus planen Metallplatten (11), zwischen die mehrere thermoplastische Folien (5) mit definierten Oberflächenrauhigkeiten übereinander gestapelt und unter hohem Druck von 3 - 5 Bar und unter großer Hitze, mit Temperaturen um 180°C, miteinander zum Kartenkörper (10) (Fig. 4) verpresst werden.

Durch das Aufbringen zweier Klebstofflagen zwischen den thermoplastischen Folien (5.1 und 5.2) mit Oberflächenrauhigkeit und dem Volumenhologramm wird erreicht, dass die raue Oberfläche der Folien mit Klebstoff aufgefüllt ist und dadurch das Hologramm während des Kartenlaminationsprozesses nicht mehr beeinflusst wird. Auf diese Weise können auch Hologramme mit individueller Personalinformation, wie beispielsweise ein Passbild, ohne Informationsänderung und Beeinträchtigung der visuellen Erkennbarkeit eingebettet werden.

Bei Verwendung eines strahlenhärtenden monomerhaltigen Klebstoffes (7) kann während der Herstellung des Folienverbundes (6) eine Individualisierung des auf die Kunststofffolie (5.1) applizierten Hologramms mittels Maskenbelichtung nach dem bekannten Colortuningverfahren durchgeführt werden. Somit wird es möglich, die Hologrammapplikation auf Kunststofffolien sowie die Personalisierung der applizierten Hologramme an getrennten Orten durchzuführen, was mehrere Vorteile hat.

Es ist kein Transport von sensiblen Personaldaten außerhalb der Kartenproduktionsstätten notwendig. Der Produzent von Ausweiskarten kann mit außer Haus vorgefertigter hologrammapplizierter thermoplastischer Folie beliefert werden und führt nur noch die Hologrammindividualisierung sowie die bei ihm ohnehin stattfindende Verpressung zu Kartenkörpern durch.

Durch Verwendung des erfindungsgemäßen Zweilagen-Folienverbundes (6) eröffnet sich auch die Möglichkeit, Hologrammlabel mit kleiner Fläche in den Kartenkörper einzubetten, was bisher ohne Beeinträchtigung der Hologrammqualität unmöglich war. Je kleiner die Fläche des erhabenen Hologramms ist, um so höher ist der Flächendruck auf das Hologramm zu Beginn des Kartenlaminationsprozesses. Erfindungsgemäß kann durch Auftrag einer im Vergleich zum Hologramm großen Klebstofffläche auf das Hologramm der örtlich vorherrschende Druck auf das Hologramm während des Kartenlaminationsprozesses auf eine größere Fläche verteilt und damit reduziert werden. Es ist allerdings darauf zu achten, dass sich die Klebstofffläche innerhalb der Kanten der Ausweiskarte(12) befindet, zu der der Kartenkörper(10) im letzten Schritt ausgestanzt wird.

Ein besonderer Vorteil der Erfindung besteht darin, dass eine Methode gefunden wurde, mit der Klebstoffschichten geeigneter Klebstoffe (4, 7), die der hohen Temperatur- und Druckbelastung beim Kartenlaminationsprozess standhalten, zwischen den zu laminierenden Folien (5.1 und 5.2) so angeordnet werden, dass eine hohe Verbundfestigkeit geschaffen wird. Hierbei hat sich gezeigt, dass eine gute Verbundhaftung des Kartenkörpers (10) nur dann erreicht wird, wenn vor dem Kartenlaminationsprozess ein Zweilagen-Folienverbund (6) hergestellt wird. Dabei muß die bei der Hologrammapplikation ausgehärtete erste Klebstofffläche vollständig von der im zweiten Schritt applizierten Klebstofffläche (7) bedeckt sein (Fig. 3).

Ist die im zweiten Schritt applizierte Fläche des Klebstoffes (7) kleiner als die bei der Hologrammapplikation ausgehärtete Fläche des Klebstoffes (4), kann keine ausreichende Haftung des bereits ausgehärteten Klebstoffes (4) zur angrenzenden Folienlage im Kartenkörper (10) erhalten werden.

Ein weiter besonderer Vorteil ist, dass mit dem erfindungsgemäßen Verfahren ein Kartenkörper, insbesondere ein Polycarbonat-Kartenkörper mit eingebettetem, klebstoffummanteltem Hologramm hergestellt werden kann, bei dem der visuelle Gesamteindruck der Karte nicht durch sichtbare Klebstoffränder im verpressten Polycarbonatkartenkörper gestört ist.

Polycarbonat hat einen im Vergleich zu anderen Kunststoffen, wie PVC, hohen Brechungsindex von 1,58. Die meisten anaerob strahlenhärtenden Klebstoffe auf Acrylatbasis weisen Brechungsindizes um 1,47 - 1,53 auf. Je größer der Brechungsindexunterschied zwischen zwei angrenzenden Materialien ist, um so stärker ist die Lichtbrechung und damit die Sichtbarkeit der Grenzfläche. Deshalb wird ein Klebstoff (7), insbesondere ein strahlenhärtender urethanmodifizierter Acrylklebstoff mit einer Brechzahl > 1,49, vorteilhafter Weise >1,52 und hoher Transparenz im sichtbaren Wellenlängenbereich bevorzugt.

Die Sichtbarkeit der Klebstoffränder im Kartenkörper (10) kann weiter minimiert werden, indem der Klebstoff (7) in einer möglichst dünnen Schicht, bevorzugter weise mit Dicken zwischen 10 und 40 µm, insbesondere 15 - 25 µm aushärtet, während Klebstoffschichten <10 µm den Colortuningprozess zur Individualisierung der Hologrammlabels zu stark verlangsamen. Der Klebstoffauftrag kann beispielsweise im Siebdruckverfahren, Schlitzgussverfahren oder Rollengravurdruckverfahren durchgeführt werden.

Überraschenderweise lassen sich Zweilagen-Folienverbunde (6), bei denen die beiden Kunststofffolien (5.1 und 5.2) über klebstoffummantelte Hologrammlabels mit einer Gesamtschichtdicke bis zu 80 µm und mit deutlich sichtbaren Klebstoffrändern miteinander verbunden sind, noch gut mit weiteren Kunststofflagen zu Kartenkörpern mit nicht mehr sichtbaren Klebstoffrändern und mit ungestörter Kartenverbundhaftung laminieren, selbst wenn eine nur 50 µm dicke Folie (5.2) für den Zweilagen Folienverbund verwendet wurde und diese nach der Kartenlamination die Kartenoberflächen-Schutzfolie bildet.

Offensichtlich wird der gehärtete Klebstoff unter den Kartenlaminationsbedingungen zu einer optisch dichteren Schicht komprimiert ohne ihre Hafteigenschaften zu verlieren. Für ausgehärtete urethanmodifizierte Acrylatklebstoffe werden vom Klebstoffhersteller maximale kurzzeitige Temperaturbelastungen von 140°C bis 170°C angegeben. Obwohl beim Kartenlaminationsprozess dieser Temperaturbereich mit 180°C überschritten wird, wird ein guter Kartenverbund erreicht. Es gibt zahlreiche hochtemperaturbeständige Klebstoffe auf Epoxydbasis, die Temperaturbelastungen >180°C standhalten. Klebstoffe dieses Typs haben allerdings schlechtere Monomerdiffusionseigenschaften, die eine Hologrammindividualisierung mit dem Colortuningverfahren nicht in der gewünschten Weise gestatten. Deshalb werden urethanmodifizierte Acrylatklebstoffe mit Temperaturbeständigkeiten im ausgehärteten Zustand von >150°C, vorteilhafter weise> 160°C bevorzugt.

Nachfolgend werden Ausführungsbeispiele des Verfahrens aufgezeigt.

### Beispiel 1:

Ein bei 140°C 30 min lang gebackener Reflexionsvolumenhologramm-Polymerfilm wird in einer Etikettenstanzmaschine zu einem Reflexionsvolumenhologramm-Labelfilm (1) mit runden Hologrammlabels mit einem Durchmesser von 3 cm und Labelabständen von 6 cm verarbeitet. Auf eine 100 µm dicke Polycarbonatfolie (5.1) (Bayer Makrolon) werden 4 x 4 cm große und 15 µm dicke Klebstoffflächen in Abständen von 6 cm im Siebdruckverfahren aufgedruckt. Der verwendete Klebstoff (4) ist ein UV-härtenderAcrylatlack mit einer Brechzahl von 1,51. Der Klebstoff (4) kann auch ein hitzeaktivierbarer schnell härtender Klebstoff sein.

Der Reflexionsvolumenhologramm-Labelfilm (1) wird so auf die mit Klebstoff bedruckte Polycarbonatfolie laminiert, dass die Labels auf den Klebstoffflächen zu liegen kommen. Dann wird mit UV-Licht ausgehärtet und die Trägerfolie (3) abgezogen (Fig. 1).

Auf die applizierten Hologrammlabel wird eine zweite, 5 x 5 cm große und 20 µm dicke Kleberschicht mit dem Klebstoff (7), einem lichthärtenden monomerhaltigen urethan-modifizierten Acrylat-Klebstoff mit einer Brechzahl von 1,53 in Siebdrucktechnik gedruckt. Anschließend wird eine zweite, 50 µm dicke Polycarbonatfolie (5.2) auflaminiert, eine teiltransparente Maskenfolie mit Personalinformationen, z. B. Passbilder, auf die Polycarbonatfolie aufgelegt und durch die Maske 0,5 - 2 Sekunden belichtet. Der Klebstoff (7) härtet in den belichteten Bereichen aus, während Monomere des noch flüssigen Klebstoffes (7) in den von der Maske abgedeckten Bereichen in die Hologrammschicht diffundieren und eine Farbänderung des Hologramms hervorrufen. Ein bis zwei Minuten nach der Maskenbelichtung wird der gesamte Klebstoffbereich mit Licht vollständig ausgehärtet (Fig. 2). Die Maske kann auch eine LCD oder DLP-Projektionsmaske sein.

Der auf diese Weise hergestellte Zweilagen-Folienverbund (6) mit ca. 50 µm dicken klebstoffummantelten individualisierten Hologrammlabel (9) (Fig. 3) zwischen den thermoplastischen Kunststofffolien (5.1 und 5.2) wird nun zusammen mit weiteren thermoplastischen Kunststofffolien (5) in der Kartenlaminationspresse (Fig. 4) bei einer Temperatur von 180°C und unter dem üblichen hohen Druck zum Kartenkörper (10) laminiert (Fig. 5). Der Kartenkörper wird zu einzelnen Ausweiskarten (12) im ID-1 Format ausgestanzt. Man erhält Ausweiskarten mit der geforderten mechanischen und chemischen Haltbarkeit, mit glatten Polycarbonatoberflächen und einem innen liegenden, brillianten, individualisierten Hologramm (9). Die innerhalb der Ausweiskartenfläche befindlichen Klebstoffränder und -flächen sind nicht mehr sichtbar (Fig. 6), obwohl sie vor der Kartenkörperlamination im Zweilagen-Folienverbund (6) (Fig. 3) deutlich erkennbar waren.

### Beispiel 2:

Ein 5 Minuten lang bei 150°C gebackener Reflexionsvolumenhologramm-Polymerfilm wird wie im Beispiel 1 beschrieben verarbeitet sowie in den Zweilagen-Folienverbund (6) integriert. Das individualisierte Hologramm (9) hat einen ca. 20% geringeren Beugungswirkungsgrad im Vergleich zum individualisierten Hologramm im Zweilagen-Folienverbund des Beispiels 1. Der Zweilagen-Folienverbund wird mit weiteren Polycarbonatfolien (5) in gewohnter Weise zum Kartenkörper (10) laminiert. Man erhält einen Kartenkörper (10) mit eingebettetem, individualisiertem Hologramm (9), mit höherer Brillianz als vor dem Kartenlaminationsprozess.

### Bezugszeichenliste

1. Reflexionsvolumenhologrammlabel-Film
2. Volumenhologrammlabel
3. Trägerfolie
4. Klebstoff
5. Thermoplastische Kunststofffolie
5.1 erste Kunststofffolie
5.2 zweite Kunststofffolie
6. Zweilagen-Folienverbund
7. strahlenhärtender monomerhaltiger Klebstoff
8. Maske
9. individualisiertes Hologrammlabel
10. Kartenkörper
11. Metallplatte
12. Ausweiskarte

## Patentansprüche

1. Dokument mit eingebettetem Hologramm, insbesondere Ausweiskarte (12) mit einem Kartenkörper (10) aus mehreren miteinander laminierten Kunststofffolien, wobei zwischen einer ersten und einer zweiten Kunststofffolie (5.1 und 5.2) ein Hologrammlabel eingebettet ist,
**dadurch gekennzeichnet,**
**dass** das eingebettete Hologrammlabel ein vollständig eingebettetes klebstoffummanteltes Volumenhologrammlabel (2, 9) ist, in dem holographische individuelle Personaldaten gespeichert sind,
wobei das individualisierte Volumenhologrammlabel (2, 9) während des temperatur-und druckunterstützten Kartenkörperlaminationsprozesses unter vollständigem Erhalt der holographischen Information in den Kartenkörper (10) der Ausweiskarte (12) eingebettet wurde.

2. Verfahren zum Herstellen des Dokuments nach Anspruch 1,
**dadurch gekennzeichnet, dass**
- in einem ersten Schritt auf einer Trägerfolie(3) angeordnete Volumenhologrammlabel (2) mit auf einer thermoplastischen Kunststofffolie (5.1) befindlichen Klebstoffbereichen (4) vollständig in Kontakt gebracht werden, die Klebstoffflächen ausgehärtet werden und danach die Trägerfolie (3) entfernt wird,
- in einem zweiten Schritt eine zweite Kunststofffolie (5.2) auf die im ersten Schritt hergestellte, Hologrammlabel (2) tragende Kunststofffolie (5.1) mit einem zweiten Klebstoff (7) im Bereich der Hologrammlabel (2) zu einem Zweilagen-Folienverbund (6) verklebt wird,
wobei ein strahlenhärtender monomerhaltiger Klebstoff (7), vorzugsweise urethanmodifizierter Acrylatklebstoff verwendet wird, der zunächst durch eine teiltransparente, personendatentragende Maske (8) mit UV-Licht teilgehärtet und nach einer Verweilzeit, in der Monomere aus den ungehärteten Klebstoffbereichen in das Hologramm diffundieren, vollständig mit Licht gehärtet wird, wodurch eine HologrammIndividualisierung stattfindet, und
- in einem dritten Schritt dieser Zweilagen-Folienverbund (6) zusammen mit weiteren thermoplastischen Kunststofffolien (5) in einer Kartenlaminationspresse mit Druck- und Temperaturunterstützung zu einem Kartenkörper (10) laminiert und zu einzelnen Ausweiskarten (12) ausgestanzt wird.

3. Verfahren nach Anspruch 2, **dadurch gekennzeichnet,**
**dass** die im zweiten Schritt ausgehärtete Klebstofffläche (7) vollständig die im ersten Schritt ausgehärtete Klebstofffläche (4) überdeckt.

4. Verfahren nach Anspruch 2, **dadurch gekennzeichnet**,
das ein Zweilagen-Folienverbund (6) hergestellt wird, bei dem die mit Klebstoff (4, 7) ummantelten Hologrammlabels (2), über die die beiden Kunststofffolien (5) miteinander verbunden sind, Schichtdicken von < 80 µm aufweisen.

5. Verfahren nach Anspruch 2, **dadurch gekennzeichnet,**
**dass** thermoplastische Kunststofffolien (5) aus Polycarbonat mit Oberflächenrauigkeit verwendet werden und die ausgehärteten Klebstoffe einen Brechungsindex >1,49, vorzugsweise >1,52 haben.

6. Verfahren nach Anspruch 2, **dadurch gekennzeichnet,**
**dass** Volumenhologrammlabel (2) auf Photopolymerbasis verwendet werden, die vor der Verklebung in den Zweilagen-Folienverbund (6) nicht gebacken wurden und ihren höchsten Beugungswirkungsgrad nach dem dritten Schritt der Einbettung in den Kartenkörper, erreichen.

7. Verfahren nach Anspruch 2, **dadurch gekennzeichnet,**
**dass** die Hologrammapplikation auf Kunststofffolien und die Personalisierung oder Individualisierung der applizierten Holgramme an getrennten Orten durchgeführt werden, wobei der erste Verfahrensschritt an einem Ort und der zweite und dritte Verfahrensschritt an einem anderen Ort durchgeführt werden.

## Claims

1. Document with embedded hologram, in particular identity card (12) having a card body (10) made of several plastic sheets laminated together, wherein a hologram label is embedded between a first and a second plastic sheet (5.1 and 5.2),
**characterized in that**
the embedded hologram label is a completely embedded volume hologram label (2, 9) wrapped in adhesive, in which individual holographic personal data are stored,
wherein the individualized volume hologram label (2, 9) has been embedded in the card body (10) of the identity card (12) during the temperature- and pressure-supported card body lamination process, with complete maintenance of the holographic information.

2. Method for manufacturing the document according to Claim 1, **characterized in that**
- in a first step, volume hologram labels (2) arranged on a carrier sheet (3) are entirely contacted with adhesive regions (4) located on a thermoplastic sheet (5.1), the adhesive surfaces are cured and the carrier sheet (3) is then removed,
- in a second step, a second plastic sheet (5.2) is adhesively bonded to the plastic sheet (5.1), bearing hologram labels (2), which was produced in the first step, by means of a second adhesive (7) in the region of the hologram labels (2) to form a two-layered sheet composite (6),
wherein a radiation-curable, monomer-containing adhesive (7), preferably urethane-modified acrylate adhesive, is used which is first partially cured with UV light through a partially transparent mask (8) bearing personal data and completely cured with light after a retention time during which monomers diffuse into the hologram from the uncured adhesive regions, leading to an individualization of the hologram, and
- in a third step, this two-layered sheet composite (6) is laminated, together with further thermoplastic sheets (5), in a card-lamination press, supported by pressure and temperature, to form a card body (10) and is being punched out to individual identity cards (12).

3. Method according to Claim 2, **characterized in that** the adhesive surface (7) cured in the second step completely covers the adhesive surface (4) cured in the first step.

4. Method according to Claim 2, **characterized in that** a two-layered sheet composite (6) is produced where the hologram labels (2) wrapped in adhesive (4, 7), by means of which the two plastic sheets (5) are interconnected, have layer thicknesses of <80 µm.

5. Method according to Claim 2, **characterized in that** thermoplastic sheets (5) made of polycarbonate with surface roughness are used and the cured adhesives have a refractive index of >1.49, preferably >1.52.

6. Method according to Claim 2, **characterized in that** volume hologram labels (2) on photopolymer basis are used which were not baked before adhesive bonding into the two-layered sheet composite (6) and which reach their highest diffraction efficiency after the third step of embedding into the card body.

7. Method according to Claim 2, **characterized in that** the hologram application on plastic sheets and the personalization or individualization of the applied holograms are performed in different places, the first method step being performed in one place and the second and third method steps in a different place.

## Revendications

1. Document avec un hologramme intégré, en particulier une carte d'identité (12) avec un corps de carte (10) formé par plusieurs feuilles plastiques contrecollées ensemble, une étiquette hologramme étant intégrée entre une première et une seconde feuille plastique (5.1 et 5.2),
**caractérisé en ce que**
l'étiquette hologramme intégrée est une étiquette hologramme volumique (2, 9) complètement intégrée enveloppée par un adhésif, sur laquelle des données personnelles individuelles holographiques sont enregistrées,
l'étiquette hologramme volumique (2, 9) individualisée ayant été intégrée dans le corps de carte (10) de la carte d'identité (12) pendant le processus de contrecollage du corps de carte sous l'effet de chaleur et de pression en conservant complètement l'information holographique.

2. Procédé pour la fabrication du document selon la revendication 1, **caractérisé en ce que**,
- au cours d'une première étape, des étiquettes hologramme volumiques (2) disposées sur une feuille de support (3) sont complètement mises en contact avec des zones adhésives (4) se trouvant sur une feuille thermoplastique (5.1), les surfaces adhésives étant durcies et la feuille de support (3) étant ensuite retirée,
- au cours d'une deuxième étape, une seconde feuille plastique (5.2) étant collée sur la feuille plastique (5.1) portant l'étiquette hologramme (2) fabriquée lors de la première étape à l'aide d'un second adhésif (7) dans la zone de l'étiquette hologramme (2) de manière à former un ensemble de feuilles à deux couches (6),
un adhésif (7) photodurcissable à teneur en monomère, de préférence un adhésif à base d'acrylate modifié par uréthane étant utilisé, lequel est tout d'abord partiellement durci avec de la lumière UV grâce à un masque (8) partiellement transparent portant des données personnelles et, après un temps de séjour pendant lequel des monomères des zones adhésives non durcies se diffusent dans l'hologramme, est complètement durci avec de la lumière, grâce à quoi il y a une individualisation d'hologramme, et
- au cours d'une troisième étape, cet ensemble de feuilles à deux couches (6) étant contrecollé, ensemble avec d'autres feuilles thermoplastiques (5), dans une presse à contrecoller pour cartes sous l'effet de chaleur et de pression pour donner un corps de carte (10), et étant découpé en cartes d'identité (12) individuelles.

3. Procédé selon la revendication 2, **caractérisé en ce que** la surface adhésive (7) durcie au cours de la deuxième étape recouvre complètement la surface adhésive (4) durcie au cours de la première étape.

4. Procédé selon la revendication 2, **caractérisé en ce qu'**un ensemble de feuilles à deux couches (6) est fabriqué, dans lequel les étiquettes hologramme (2) enveloppées d'un adhésif (4, 7), par l'intermédiaire desquelles les deux feuilles plastiques (5) sont reliées ensemble, présentent une épaisseur de couche < 80µm.

5. Procédé selon la revendication 2, **caractérisé en ce que** l'on utilise des feuilles thermoplastiques (5) en polycarbonate avec une rugosité de surface, et **en ce que** les adhésifs durcis possèdent un indice de réfraction > 1,49, de préférence > 1,52.

6. Procédé selon la revendication 2, **caractérisé en ce que** l'on utilise des étiquettes hologramme volumiques (2) sur une base photopolymère, lesquelles n'ont pas été soumises à une cuisson avant le collage dans l'ensemble de feuilles à deux couches (6) et lesquelles atteignent leur efficacité de diffraction la plus élevée après la troisième étape d'intégration dans le corps de carte.

7. Procédé selon la revendication 2, **caractérisé en ce que** l'application des hologrammes sur des feuilles plastiques et la personnalisation ou l'individualisation des hologrammes appliqués sont exécutées à des endroits distincts, la première étape du procédé étant exécutée en un endroit, et la deuxième et la troisième étape du procédé étant exécutées en un autre endroit.
